## Europäisches Patentamt
## European Patent Office
## Office européen des brevets

(11) Publication number: **0 169 324**
**B1**

(12) **EUROPEAN PATENT SPECIFICATION**

(45) Date of publication of patent specification: **18.01.89**

(51) Int. Cl.⁴: **H 04 L 11/00,** G 06 F 15/16

(21) Application number: **85106041.8**

(22) Date of filing: **17.05.85**

(54) Switching protocol with retry.

(30) Priority: **29.06.84 US 626511**

(43) Date of publication of application:
**29.01.86 Bulletin 86/05**

(45) Publication of the grant of the patent:
**18.01.89 Bulletin 89/03**

(84) Designated Contracting States:
**DE FR GB**

(56) References cited:
**EP-A-0 141 233**
**US-A-4 412 322**

**1981 IEEE INTERNATIONAL SYMPOSIUM ON CIRCUITS AND SYSTEMS PROCEEDINGS,** Chicago, Illinois, 27th-29th April 1981, pages 243-247, IEEE, New York, US; M.A. FRANKLIN et al.: "VLSI based interconnection networks"

(73) Proprietor: **International Business Machines Corporation**
**Old Orchard Road**
**Armonk, N.Y. 10504 (US)**

(72) Inventor: **Lebizay, Gerald**
**15 Stewart Place APT 6K**
**White Plains New York 10604 (US)**
Inventor: **Lien, Yeong-Chang**
**77 Hickory Road**
**Briarcliff Manor New York 10510 (US)**
Inventor: **Yu, Philip Shi-Lung**
**20-4 Manville Lane**
**Pleasantville New York 10570 (US)**

(74) Representative: **Appleton, John Edward**
**IBM United Kingdom Limited Intellectual Property Department Hursley Park**
**Winchester Hampshire SO21 2JN (GB)**

Courier Press, Leamington Spa, England.

## Description

### Field of the invention

The invention relates to a protocol with retry for a switching system using multiple, autonomous planes of cross-point switches.

### Background of the invention

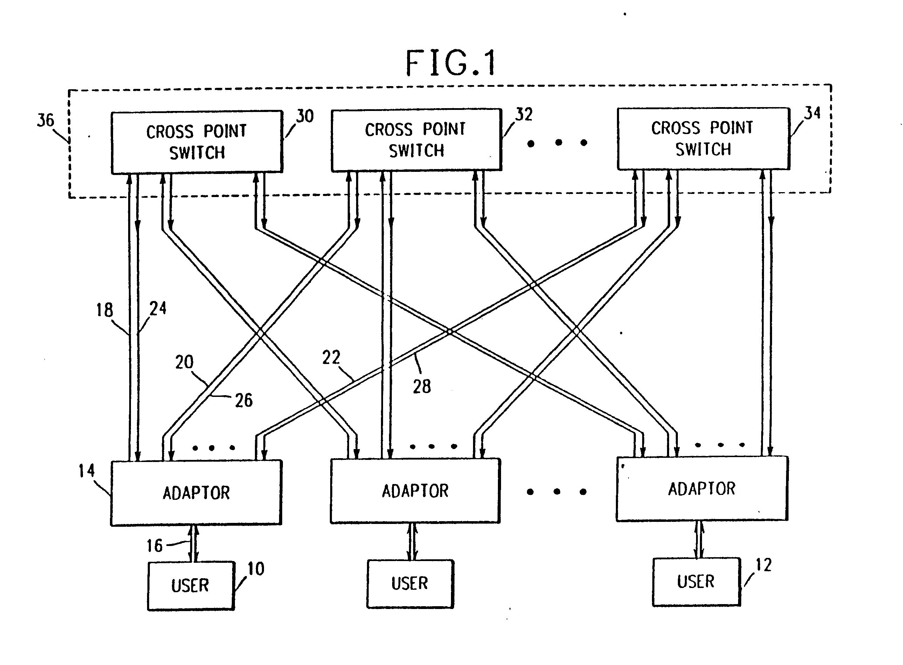

For background, reference is made to our copending European Patent Application 85106034.3, entitled "Switching Systems" (EP—A—170799, published 12.2.86). That patent application discloses a switching system, illustrated in Figure 1 hereto, for selectively providing point-to-point communication paths between for example users 10 and 12. An adaptor 14 is associated with each user 10 and is connected to it by an internal memory bus 16. The adaptor 14 divides a message on the internal memory bus 16 into a number of parallel paths. Each path is defined by an output line 18, 20 and 22. Each output line is associated with a parallel input line 24, 26 and 28 to form pairs of full-duplex lines. Each pair of input and output lines 18 and 24, 20 and 26, or 22 and 28 are connected to a different cross-point switch 30, 32 and 34 in a central switch 36. Only three sets of full-duplex lines and three cross-point switches are shown in Figure 1 but any number equal to or greater than two is possible. In a further embodiment there may be a greater number g of full- duplex lines between the adaptor 14 and the individual switches 30, 32 and 34.

The remaining users such as user 12 have a similar adaptor and similar full-duplex lines to the individual cross-point switches. Each adaptor 14 not only can divide a message from the internal memory bus 16 onto the parallel output lines 18, 20 and 22 but can also recombine messages that it receives on parallel input lines 24, 26 and 28 into a recombined message on the internal memory bus 16.

If a user 10 wishes to communicate with another user 12, its adaptor 14 simultaneously instructs all the cross-point switches 30, 32 and 34 to make the proper connections to the input and output lines of the adaptor of the other user 12. Thereby, parallel communication paths are established between the two users 10 and 12. The total bandwidth of the parallel communication path is thus not limited to the bandwidth of a single duplex line or of a single cross-point switch. Instead, the limiting bandwidth of the duplex line 18 and 24 or of the cross-point switch 30 is multiplied by the number of parallel paths.

A roughly analogous communication system is described in U.S. Patent 4,015,204 to Miyazawa in which data are switched into parallel registers which are then used to modulate different carrier frequencies on a single transmission line. Wide band switching is itself a known idea, as discussed by Teraslinna in U.S. Patent 4,402,008. Parallel planes of circuits for either storage or switching have been described by Mansuetto et al in U.S. Patent 3,321,745, by Burns in U.S. Patent 3,355,721 and by Briley in U.S. Patent 4,412,322.

One of the functions of each adaptor 14 is to issue controls to each of the cross-point switches 30, 32 and 34 to make the proper connections and disconnections. These commands are carried on the same output lines 18, 20 and 22 that are used for the subsequently transmitted parallel message. The previously described patent application discloses a fast and efficient protocol for the connection and disconnection commands. The protocol must be followed for all the cross-point switches 30, 32 and 34 in the central switch 36 that are being used for the parallel communication paths. It is assumed that the cross-point switches 30, 32 and 34 are independent of each other so that a command issued to one cross-point switch has no effect upon the other cross-point switches in the central switch 36.

Thus if there are n cross-point switches 30, 32 and 34 setting up the parallel paths, n simultaneous commands for connection must be issued by the requesting adaptor 14. It has previously been assumed that all n requests would either be all successful or all unsucessful. An unsuccessful request would result when the user to which the connection is requested is already busy, that is, its input and output lines are already connected to still another user. However, the switching system of Figure 1 is intended to be operated at very high switching rates and the simultaneity of parallel commands issuing from a single adaptor is no guarantee that the commands will be simultaneously received at all the cross-point switches 30, 32 and 34. A fairly large amount of time skew between the various parallel paths is anticipated so that the connections on the various planes of the central switch 36 are likely to be performed at slightly varying times depending upon the delays introduced by separate output lines and the control circuitry within the individual cross-point switches. Furthermore, there is no master clock but instead different clocks control the switching functions on each plane. As a result, if two users are simultaneously attempting to make a connection to a single third user, there is a probability that some connections will be made for the first user and some for the second user. Neither user would have established a complete set of parallel connection with the desired destination user.

A retry protocol for blocked messages is described in 1981 IEEE International Symposium on Circuits and Systems Proceedings, Chicago, Illinois, 27th—29th April 1981, pages 243—247, IEEE, New York, US; M. A. Franklin et al.: "VLSI based interconnection networks".

### Summary of the invention

Accordingly, it is an object of this invention to provide a method for establishing parallel connections in multiple cross-point switches between two users.

It is a further object of this invention to provide a method of resolving a conflict when two or more users attempt to make conflicting connections to another user.

The invention in its preferred form can be summarized as a protocol for accomplishing simultaneous connections through a plurality of autonomous switching planes. A user issues a connection command to all of the planes. The user is notified by each of the planes if a connection has been successfully made. If all the connections have not been made, the user issues a retry request to resolve the conflict with other users that have attempted to make conflicting connections. The retry request may be of three separate forms. The user that has established a connection in a particular plane can issue a retry request that overrides already established connections in the remaining planes. In another form, the user that has established connections through a majority of the planes issues a retry request that likewise overrides the connections already established in the remaining planes. In a third form, all users issue retry requests. The switching planes receive the retry request and according to a priority scheme among the users accept a higher priority retry request than the conflicting connection and reject a lower priority one.

Brief description of the drawings

Figure 1 is a block diagram of the multi-plane switching system to which the present invention can be applied.

Figure 2 is a timing diagram for the protocol of this invention.

Figure 3 is a block diagram of an adaptor for use with this invention.

Detailed description of the preferred embodiments

In the present invention, the user establishes simultaneous communication paths through the multiple autonomous switching planes by the use of three commands CONNECT, DISCONNECT and RETRY. The first two of these, CONNECT and DISCONNECT are described in the co-pending and previously cited patent application. That explanation is repeated here because of their integral relationship with the new command RETRY.

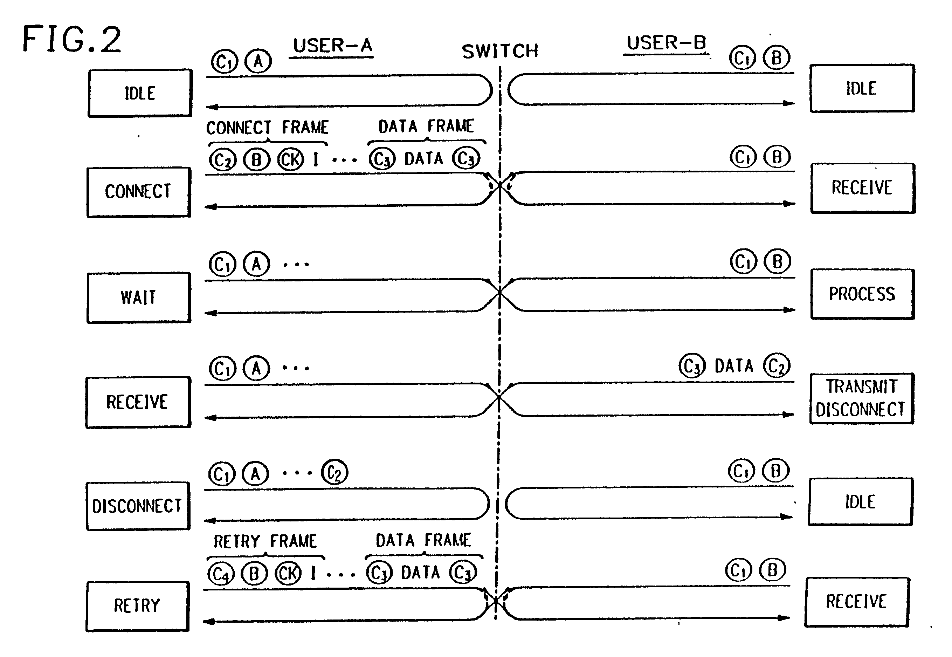

The switching protocol assumes several limitations upon the structure of the central switch and the serial links 18—28. First of all, it is assumed that all data transfer is accomplished by a request/response sequence, that is, that one user requests another user to respond. Prior to the request, there is no connection between the user, and, after the response, the connection is broken. It is further assumed that each adaptor has two serial links to each of the switching planes, one for transmitting and one for receiving. These two links can be considered as a full-duplex link. It is further assumed that the adaptors are continuously broadcasting and receiving at some fixed repetition rate. This continuous broadcasting is illustrated in Figure 2 for two users A and B connected through the switching system. If user A is not otherwise connection through the switch, the switch connects the input from the user A to the output back to user A. Similarly, the output from user B is connected to its own input if the two serial links are not otherwise used. In the idle mode, as illustrated in Figure 2, both user A and user B are periodically transmitting a charactersitic control word $C_1$ followed by the identification of the transmitting user. As explained later, the idle transmission can include a clock synchronization signal (010101 etc.) for achieving clock synchronization between two subsystems. Because the switch reflects these signals back to the transmitting user, after a progation time, both user A and user B receive their own idle transmissions.

If user A wishes to transmit a request to user B, user A transmits first an 8 byte data frame. The connect frame consists of the first byte $C_2$ indicating a request for a connection at the switch. The connect control character $C_2$ is followed by the identification B of the requested destination user. The connect frame finishes up with a clock synchronization sequence (010101 etc.) and then idle characters. The connect frame is equivalent to a CONNECT (A, B) command. Following the connect frame is a data frame containing data which is delimited at both the beginning and the end by delimiting characters $C_3$. The data in the data frame provides the information for the receiving user B to respond to.

Our European patent application 84111283.2 describes a very fast, pipelined marking and unmarking procedure. When a connection request is received by the cross-point switch, the request is queued for processing by the switch controller. The controller uses a first-come, first-serve discipline. The controller contains a port connection table with a busy bit associated with every meaningfully connected port. When a connection to a port is processed, its busy bit is queried. If the busy bit of B is 0, i.e. idle, the busy bits of A and B are set to 1 and then the request is successfully granted by marking the cross-points at both (A, B) and (B, A). It is believed that if the connections through the switch is available, it can be accomplished in 50 ns, allowing the following data frame to be transmitted through the switch to the receiving user B. If however the connection cannot be made, for example, because user B is busy and its busy bit is 1, no change in connection is made and the transmitting user A receives back its own connect and data frames. If the connection is successfully made, the transmitting user A receives instead the idle transmission $C_1B$ of the station to which it is transmitting, thus confirming the connection.

Once the receiving user B has received the request, it must spend some time processing this request. During the processing time, user B continues to broadcast its idle code $C_1B$ which is received by the originally requesting user A. A clock synchronization signal in the idle transmission would synchronize the clock of A with the clock of B. This user A is in a wait state awaiting the response and is also continuing to transmit its idle sequence of $C_1A$, which is transmitted to the other user B.

Once the user B has had sufficient time to process the request for data, it proceeds to transmit the data delimited on the forward end by a delimiter $C_3$ and delimited on the trailing end by the control character $C_2$. Although the control character $C_2$ was previously used as a connect control character, it also indicates to an already connected cross-point that the cross-point is to be disconnected. The data is transmitted in the delimited packet and may be of substantial length, for instance 132 bytes. This data is the response to the original request and is received by the requesting user A. During the time of the data transmission, the user A continues to broadcast its idle sequence $C_1A$.

After the data packet has passed through the switch, the cross-point connecting user A to user B is disconnected. The user B then recommences sending its idle sequence $C_1B$ which is reflected back to user B by the switch. The user A, which has continued to transmit its idle sequence $C_1A$ during the data reception, sends out a disconnect control character $C_2$ to insure the disconnection at the switch. When the user A begins to receive its own idle code $C_1A$, it has confirmed this disconnection at the cross-point switch. Either of the disconnect control sequences can be considered as the DISCONNECT (A, B) command.

The above protocol is really the protocol for a single plane. Similar commands must be simultaneously issued to all the planes and the above description assumes that all the connections and disconnections were in fact simultaneously performed on all the planes. However, as previously described, the situation can arise where a CONNECT (A, B) was successfully completed on one plane but was unsuccessful on another plane.

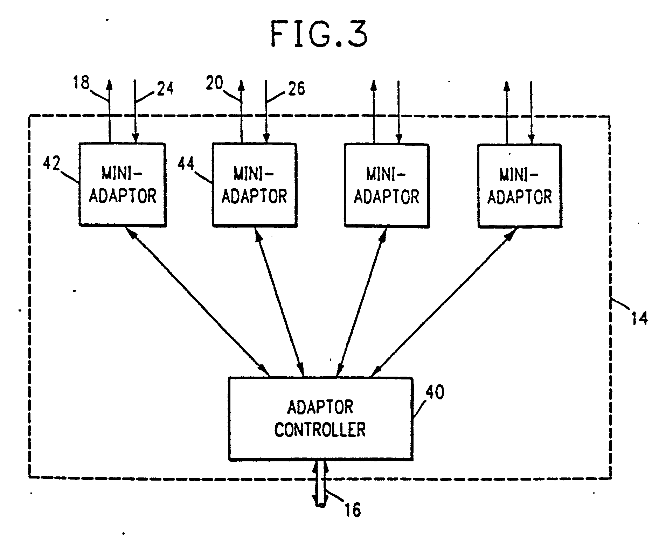

The adaptor 14 is divided, as illustrated in Figure 3, into an adaptor controller 40 and separate mini-adaptors 42 and 44. The adaptor controller 40 receives a message on the internal memory bus 16 and divides it between the mini-adaptors 42 and 44. Each mini-adaptor 42 or 44 sends its part of the divided message on the output link 18 or 20 and receives the divided message on the input link 24 or 26. Each mini-adaptor 42 or 46 is connected by the serial links to a separate autonomous cross-point switch. If g is greater than 1, there is a corresponding increase in the number of input and output links connected to each mini-adaptor. In order for the parallel communication paths to be set up through the central switch, each mini-adaptor sends out the connection request on its output link 18 or 20. The protocol of Figure 2 applies to each of the mini-adaptors 42 and 44. The protocol assures that the mini-adaptors are notified of the success or the lack of success for their respective request. This information is conveyed to the adaptor controller 40. After the adaptor controller 40 has caused the mini-adaptors to transmit the simultaneous connection requests to the individual autonomous planes, it waits a predetermined time T to receive confirmation of the n requests. If all n requests have been granted, the switch set-up is complete and processing continues. If none of the requests have been granted, the adaptor waits for a random delay time $T_0$ to reinitiate the switch set-up, that is, to again cause all the mini-adaptors 42 and 44 to issue their connect command. However, if after the predetermined time T only some of the end cross-spoint connections have been granted, then a contention resolution is required because some of the necessary paths have been blocked by a conflicting request from another adaptor.

The conflict can arise in a number of different ways. For example, if the central switch has received two nearly simultaneous commands CONNECT (A, B) and CONNECT (C, B), then the users A and C are both requesting access to the user B and each requires all n ports to user B. Because of the autonomous nature of the n cross-point switches, some of the ports were connected to user A and some to the user C and neither user A nor user C is successfully and completely connected. Another situation arises when the users A and B are nearly simultaneously requesting connection to each other, that is, the command CONNECT (A, B) overlaps the command CONNECT (B, A). The contention in this conflict is not for the cross-points or for the ports but rather for which of the two users A and B controls those cross-point switches or ports according to the protocol of Figure 2. A third type of conflict arises when the user A is requesting a connection to the user B at the same time that the user B is requesting connection to a third user C, that is, the conflict between CONNECT (A, B) with CONNECT (B, C). There are more complex conflicts that may arise when more than two connection commands overlap, for example, the conflict among CONNECT (A, B), CONNECT (C, D) and CONNECT (B, C).

According to the invention, once the adaptor controller 40 has determined that a conflict exists, it follows a conflict protocol to cause the mini-adaptors 42 which have not been successfully connected because of a conflict to issue RETRY commands in an effort to complete the full set of connections in the autonomous cross-point switches 30—34. The separate cross-point switches 30—34 receive the RETRY commands and, following the protocol, override a previously made connection or cross-point in order to grant at least one of the RETRY commands. The RETRY command differs from the CONNECT command in that the CONNECT (A, B) command is successfully executed only if the cross-point (A, B) is available. In the previously described controller, this availability is indicated by the busy bit for B being 0. On the other hand, if the RETRY (A, B) is granted access by the conflict protocol, the connection between A and B is made despite the fact that the busy bit for B is 1, indicating that B is already busy. That is, the RETRY command can override an already existing connection.

The conflict protocol can be implemented in at least three ways. In the first implementation, one of the switching planes or cross-point switches 30—34 is specified as determining the winner, for example, cross-point 30. The adaptor controller 40 determines if the CONNECT command issued to the specified cross-point switch 30 was successfully granted. If the CONNECT command to the specified cross-point 30 was granted, the adaptor controller 40 causes RETRY commands to be issued by all of its mini-adaptors 42 and 44 that have been unsuccessful because of conflict, that is, that have not been connected because of the conflict. If the CONNECT command to the specified cross-point switch 30 was not successfully granted, the adaptor controller 40 does not cause any RETRY commands to be issued. Thus one and only one adaptor will issue RETRY commands.

According to this first way of implementing the conflict protocol, any cross-point switch 30—34 receiving a RETRY command honors the command and overrides any existing connections. As a result, the winning adaptor completes its connections through all the planes of the central switch 36 and the losing adaptors are disconnected by the RETRY commands of the winning adaptor.

A second way of implementing the conflict protocol is similar to the first implementation except that the winning adaptor is the one that has successfully been connected through more than half of the cross-point switches 30—34. The winning adaptor then issues the necessary RETRY commands to complete its own connections and to disconnect the losing adaptors. This way of implementing the conflict protocol, however, has the disadvantage that when two adaptors have each successfully made connections on exactly half of the cross-point switches, there is no defined winner. Furthermore, when there are three or more adaptors involved in the conflict, the possibility arises that no one adaptor has won a majority of connections. Accordingly, there is no clear winner according to the stated rule.

A conflict can possibly involve only a single CONNECT request. If a CONNECT request overlaps a DISCONNECT request that disconnects the ports requested by the CONNECT, connections may be successfully completed on only some of the planes, while the remaining planes become available somewhat later, but nonetheless too late. In this situation, as well as the situations described above, there may be no winner in the first two ways of implementing the conflict protocol. A method of escaping the no-winner situation is to have the losing adaptor monitor the connection clock signals on its successfully completed connections. If there is a winner, the connection clock signals will be terminated by the winner's RETRY command disconnecting the losing adaptor. However, if after the elapse of a time-out period after the start of the conflict, the connection clock signals continue, the losing adaptor sends DISCONNECT commands to the connected switching planes involved in the conflict to end the no-winner situation.

In the third implementation of the conflict protocol, the adaptor controller 40, upon detecting a conflict situation, causes all of its mini-adaptors 42 and 44 that have been unsuccessful because of conflict, that is, have not been connected because of conflict, to issue RETRY commands. Since at least two adaptors are in conflict (discounting the CONNECT/DISCONNECT overlap situation), more than one set of RETRY commands will be issued by the various adaptors. No priority is relied upon in issuing the RETRY commands. However, each adaptor is assigned an address and the addresses are arranged in a sequential priority scheme, e.g. A has priority over B and other lower priority adaptors, B has priority over C and other lower priority adaptors, etc.

The controllers on the autonomous switching planes are programmed with the address priority scheme. When the switching plane controller receives a RETRY request from an adaptor, it determines the priority of the requesting adaptor against the priority of the adaptor that caused the conflicting connection to be made. If the requesting adaptor has a higher purity, the RETRY request overrides the existing connection. If the requesting adaptor has a lower priority, the RETRY request is rejected by the switch. As a result the higher priority adaptor in conflict will complete the missing connections while the lower priority adaptor will lose its already existing connections by a higher priority RETRY. Eventually a complete set of connections are made.

For example, if CONNECT (A, B) and CONNECT (C, B) are in conflict, on some planes (A, B) are connected and in other planes (C, B) are connected. Both adaptors A and C issue RETRY requests for their missing planes. In this case, each plane receives one RETRY request. If the RETRY request is from A, and the port to B is requested by A but is currently held by C, the switch determines that A has a higher priority than C and so honors the RETRY (A, B) request. However the RETRY (C, B) request would be refused in view of the facts that B is currently held by A and that A outranks C.

In utilizing this priority scheme, the priorities of the two adaptors involved in any connection must be distinguished. A source adaptor is the adaptor making a request for connection to a destination adaptor. The priority of the source adaptor making the RETRY request is compared with the priority of the source adaptor causing the conflict. Thus, if there is a conflict between CONNECT (B, C) and CONNECT (C, A), RETRY (B, C) will have priority over CONNECT (C, A) even though the destination adaptor A has priority over the successful source adaptor C. Similarly, RETRY (C, A) will not have priority over CONNECT (B, C). Also a conflict between CONNECT (A, B) and CONNECT (B, A) will be resolved in favor of RETRY (A, B) over the previously successful CONNECT (B, A). Conflicts involving more than two adaptors may require more than a single issuance of the RETRY request for a full resolution of the conflict.

The protocol shown in Figure 2 provides that the CONNECT and RETRY commands are implemented as connect and retry frames that are immediately followed by data frames. As a result of the fast switching, data can be quickly transmitted through the switch. However in a conflict situation, parallel data frames may arrive at the destination adaptor from at least two source adaptors. Moreover as a result of the RETRY command, an additional data frame will be transmitted through the overridden cross-point. Thus the destination adaptor need to have the means to recognize when it has received a complete set of data frames from a single source adaptor and furthermore must have the buffering capabilities to handle more than one data frame on a single input line before recombining one of those data frames with the proper parallel data frames. The source recognition could be based on the data frame containing a source identifier. Only when the destination adaptor has received parallel data frames from the same source adaptor would it consider the data to be received, that is, proceed to the merging of the data frames and processing that data.

## Claims

1. A switching method of establishing connections between users for a switching system that establishes multiple communication paths through multiple autonomous switching planes by a user issuing connection requests to each of said switching planes, comprising the steps of:

determining which of said connections requests have been successfully completed, with a conflict situation existing if some but not all of said requests have been completed;

issuing retry requests in a conflict situation to all planes on which said connection requests have not been completed, said retry requests being issued according to a conflict protocol, said determining and issuing steps being performed by a user that had issued said uncompleted connection requests; and

honoring said retry requests according to said protocol, said honoring causing previously completed connections to be disconnected, said honoring being performed by the switching planes to which said retry requests had been issued.

2. A switching method as recited in Claim 1, wherein according to said protocol:

said determining step determines if a requested connection has been completed in a predetermined one of said switching planes; and

said issuing step issues said retry requests only if said requested connection from said user in said predetermined switching plane has been completed; and

said honoring step honors all said retry requests.

3. A switching method as recited in Claim 1, wherein according to said protocol:

said determining step determines if said requested connections have been made in a majority of said switching planes;

said issuing step issues said retry requests only if said majority of requested connections from said user have completed; and

said honoring step honors all said retry requests.

4. A switching method as recited in Claim 1, wherein according to said protocol:

said issuing step issues said retry request to all said switching planes in which said requested connections have not been completed; and

said honoring step honors said retry requests only from a first user having a higher priority than a second user issuing the connection request which prevented the completion of the connection request from said first user.

5. A switching method as recited in Claim 2 or 3:

wherein said determining step, after a time-out period following the determination of a conflict situation, determines which of said connection requests remain successfully completed, and if only some of said connection requests remain successfully completed, then a no-winner situation is existing; and

further comprising the step of issuing disconnection commands in a no-winner situation to all planes on which said connection requests remain completed.

## Patentansprüche

1. Vermittlungsverfahren zum Herstellen von Verbindungen zwischen Benützern für ein Vermittlungssystem, das mehrfache Kommunikationswege durch mehrfache autonome Vermittlungsebenen bildet, indem ein Benutzer Verbindungsaufforderungen zu jeder der Vermittlungsebenen ausgibt, welches die Schritte umfaßt:

Bestimmen, welche der Verbindungsaufforderungen erfolgreich abgeschlossen worden ist, wobei einer Konfliktsituation dann auftritt, wenn einige, jedoch nicht alle, dieser Aufforderungen abgeschlossen worden sind,

Ausgeben von Wiederholungsaufforderungen in einer Konfliktsituation an alle Ebenen, auf denen die Verbindungsaufforderungen noch nicht abgeschlossen worden sind, wobei die Wiederholungsaufforderungen entsprechend einem Konfliktprotokoll ausgegeben werden und die Bestimmungs- und Ausgabeschritte von einem Benutzer ausgeführt werden, der die nichtabgeschlossenen Verbindungsaufforderungen ausgegeben hatte, und

Honorieren der Wiederholungsaufforderungen nach dem genannten Protokoll, wobei das Honorieren bewirkt, daß vorher abgeschlossene Verbindungen getrennt werden und das Honorieren durch die Vermittlungsebenen erfolgt, zu denen die Wiederholungsaufforderungen ausgegeben worden sind.

2. Vermittlungsverfahren nach Anspruch 1, bei dem gemäß dem genannten Protokoll

der Bestimmungsschritt bestimmt, ob eine geforderte Verbindung in einer bestimmten Ebene der Vermittlungsebenen abgeschlossen ist, und

der Ausgabeschritt die Wiederholungsaufforderungen nur dann ausgibt, wenn die vom Benutzer geforderte Verbindung in der bestimmten Verbindungsebene abgeschlossen worden ist und der Honorierungsschritt alle genannten Wiederholungsaufforderungen honoriert.

3. Vermittlungsverfahren nach Anspruch 1, bei dem nach dem Protokoll

der Bestimmungsschritt bestimmt, ob die geforderten Verbindungen in einer Mehrzahl der Vermittlungsebenen hergestellt sind,

der Ausgabeschritt die Wiederholungsaufforderungen nur dann ausgibt, wenn die Mehrzahl der vom Benutzer geforderten Verbindungen abgeschlossen sind, und

der Honorierungsschritt alle genannten Wiederholungsaufforderungen honoriert.

4. Vermittlungsverfahren nach Anspruch 1, bei dem nach dem Protokoll

der Ausgabeschritt die Wiederholungsaufforderungen an alle genannten Vermittlungsebenen ausgibt, in denen die geforderten Verbindungen nicht abgeschlossen worden sind, und

der Honorierungsschritt nur die Wiederholungsaufforderungen von einem ersten Benutzer mit einer höheren Priorität als einem zweiten Benutzer honoriert, der die Verbindungsaufforderung ausgibt, die den Abschluß der Verbindungsaufforderung vom ersten Benutzer verhindert.

5. Vermittlungsverfahren nach Anspruch 2 oder 3, bei dem der Bestimmungsschritt nach einem Auszeitintervall anschließend an die Feststellung einer Konfliktsituation bestimmt, welche der Verbindungsaufforderungen erfolgreich abgeschlossen bleiben, wobei dann, wenn nur einiger der Verbindungsaufforderungen erfolgreich abgeschlossen bleiben, eine Situation ohne Sieger besteht, und

welches weiterhin den Schritt der Ausgabe von Trennbefehlen in einer Situation ohne Sieger an alle Ebenen umfaßt, auf denen die Verbindungsaufforderungen abgeschlossen bleiben.

**Revendications**

1. Procédé de commutation pour établir des connexions entre des usagers d'un système de commutation qui établit des circuits de communication multiples par des plans de commutation autonomes et multiples, par un usager qui émet des demandes de connexion vers chacun desdits plans de commutation, comprenant les phases:

de détermination de celles desdites demandes de connexion qui ont été exécutées avec succès, avec une situation de conflit existante, si certaines, mais non la totalité, desdites demandes ont été exécutées;

d'émission de demandes de tentative de relance dans une situation de conflit vers tous les plans sur lesquels lesdites demandes de connexion n'ont pas été exécutées, lesdites demandes de tentative de relance étant émises selon un protocole de conflit, lesdites phases de détermination et d'émission étant exécutées par un usager qui a émis lesdits demandes de connexion non exécutées; et

de satisfaction desdites demandes de tentative de relance selon ledit protocole, ladite satisfaction entraînant que des connexions précédemment établies soient déconnectées, ladite satisfaction étant exécutée par les plans de commutation vers lesquels lesdites demandes de tentative de relance ont été émises.

2. Procédé de commutation selon la revendication 1, dans lequel, selon ledit protocole:

ladite phase de détermination détermine si une connexion demandée à été exécutée dans l'un prédéterminé desdits plans de commutation; et

ladite phase d'émission émet lesdites demandes de tentative de relance seulement si ladite connexion demandée par ledit usager dans ledit plan de commutation a été exécutée; et

ladite phase de satisfaction satisfait toutes lesdites demandes de tentative de relance.

3. Procédé de commutation selon la revendication 1, dans lequel, selon ledit protocole:

ladite phase de détermination détermine si lesdites connexions demandées ont été établies dans une majorité desdits plans de commutation;

ladite phase d'émission émet lesdites demandes de tentative de relance, seulement si ladite majorité de connexions demandées par ledit usager ont été exécutées; et

ladite phase de satisfaction satisfait toutes lesdites demandes de tentative de relance.

4. Procédé de commutation selon la revendication 1, dans lequel, selon ledit protocole:

ladite phase d'émission émet ladite demande de tentative de relance vers tous lesdits plans de commutation dans lesquels lesdites connexions demandées n'ont pas été exécutées; et

ladite phase de satisfaction satisfait lesdites demandes de tentative de relance, seulement à partir d'un premier usager ayant une priorité plus élevée qu'un second usager qui émet la demande de connexion qui a empêché l'exécution de ladite demande de connexion provenant dudit premier usager.

5. Procédé de commutation selon la revendication 2 ou 3:

dans lequel ladite phase de détermination, après l'écoulement d'une période de temps suivant la détermination d'une situation de conflit, détermine celles desdites demandes de connexion qui restent exécutées avec succès et si seulement certaines desdites demandes de connexion restent exécutées avec succès, il existe alors une situation de non gagnant; et

comprenant en outre une phase d'émission de commandes de déconnexion dans une situation de non gagnant, à tous les plans sur lesquels lesdites demandes de connexion restent exécutées.

FIG.1

FIG.2

USER-A                    SWITCH        USER-B

$C_1$ Ⓐ                                                $C_1$ Ⓑ

IDLE                                                                    IDLE

CONNECT FRAME        DATA FRAME

$C_2$ Ⓑ CK I · · · $C_3$ DATA $C_3$                    $C_1$ Ⓑ

CONNECT                                                              RECEIVE

$C_1$ Ⓐ · · ·                                          $C_1$ Ⓑ

WAIT                                                                    PROCESS

$C_1$ Ⓐ · · ·                              $C_3$ DATA $C_2$

RECEIVE                                                              TRANSMIT
                                                                         DISCONNECT

$C_1$ Ⓐ · · · $C_2$                                    $C_1$ Ⓑ

DISCONNECT                                                        IDLE

RETRY FRAME          DATA FRAME

$C_4$ Ⓑ CK I · · · $C_3$ DATA $C_3$                    $C_1$ Ⓑ

RETRY                                                                  RECEIVE

EP 0 169 324 B1

# FIG.3